# EUROPÄISCHE PATENTSCHRIFT

(11) **EP 2 952 847 B1**
(45) Veröffentlichungstag und Bekanntmachung des Hinweises auf die Patenterteilung: **08.08.2018**
(21) Anmeldenummer: 15170020.0
(22) Anmeldetag: 01.06.2015
(51) Int. Cl.: B60J 1/00

(54) **FAHRZEUG MIT FENSTERSCHEIBE**
VEHICLE WITH WINDOW PANE
VÉHICULE DOTÉ DE VITRE DE FENÊTRE

(30) Priorität: 03.06.2014 DE 102014007861
(43) Veröffentlichungstag der Anmeldung: 09.12.2015
(73) Patentinhaber: Krauss-Maffei Wegmann GmbH & Co. KG, 80997 München (DE)
(72) Erfinder: Platschek, Dr. Barbara, 80997 München (DE); Grasser, Stefan, 80997 München (DE); Bayer, Dr. Robert, 80997 München (DE)
(74) Vertreter: Feder Walter Ebert

(56) Entgegenhaltungen:
- WO-A1-01/53769
- DE-U1- 7 739 670
- US-A- 2 436 374

## Beschreibung

Die Erfindung betrifft ein Fahrzeug mit einer Scheibenausnehmung zur Aufnahme einer Fensterscheibe, wobei die Scheibenausnehmung in einer Tür des Fahrzeugs und/oder in einer Seitenwand des Fahrzeugs und/oder frontseitig am Fahrzeug und/oder heckseitig am Fahrzeug angeordnet ist.

Die Erfindung kann insbesondere bei militärischen und/oder gepanzerten Fahrzeugen Einsatz finden. Hierbei werden häufig gepanzerte Fensterscheiben verwendet. Diese Scheiben können eine erhebliche Dicke aufweisen.

Aufgrund der großen Dicke der Scheiben sind neuartige Integrationskonzepte in das Fahrzeug erforderlich. Die Erfindung kann damit eingesetzt werden bei neu zu konzipierenden Fahrzeugen als auch bei Nachrüstlösungen in bestehenden Fahrzeugen.

Es besteht das Problem, dass die Scheibe entweder zu weit nach außen übersteht, so dass Verlademaße oder Tunnelfahrten des Fahrzeugs beeinträchtigt sind, oder dass die Scheibe zu weit nach innen übersteht, so dass der Fahrzeuginnenraum zu sehr eingeschränkt wird und/oder Verletzungsgefahr besteht.

Sofern die Scheibe in einem Scheibenrahmen geführt ist, besteht das Problem, dass bei dicken Scheiben und dementsprechend dicken Scheibenrahmen die Sicht nach Fahrzeugaußen zu sehr beeinträchtigt wird.

Die US 2 436 374 A zeigt eine Dachluke eines gepanzerten Fahrzeugs mit integrierten Sichtfenstern. Die DE 77 39 670 U1 und die WO 01/53769 A1 zeigen Sicherheitsgläser für Fahrzeuge.

Die Erfindung löst die Aufgabe mit den Merkmalen des Anspruches 1.

Das Fahrzeug mit einer Scheibenausnehmung zur Aufnahme einer Fensterscheibe ist dadurch gekennzeichnet sein, dass die Fensterscheibe gegenüber der Scheibenausnehmung geneigt ist. Die Fensterscheibe kann gegenüber der Scheibenausnehmung schräg gestellt sein. Die Fensterscheibe kann gegenüber der Scheibenausnehmung gekippt sein.

Die Scheibenausnehmung kann in einer Wandung des Fahrzeugs angeordnet sein. Die Scheibenausnehmung kann eine ebene Fläche aufspannen.

Der Neigungswinkel zwischen Fensterscheibe und Scheibenausnehmung oder der Wandung kann größer 5° oder größer 10° oder größer 15° sein.

Der Neigungswinkel zwischen der Fensterscheibe und der Scheibenausnehmung oder der Wandung kann kleiner 30° oder kleiner 20° oder kleiner 15° sein.

Die Normale der Fensterscheibe kann unter einem Winkel zur Normalen der Scheibenausnehmung oder der Wandung sein. Der Winkel kann in den oben genannten Bereichen liegen.

Bevorzugt liegt die Scheibenausnehmung oder die Wandung in einem Winkel zur Vertikalen, der größer als der Winkel zwischen der Fensterscheibe und der Vertikalen ist.

Bevorzugt steht die Fensterscheibe im oberen Bereich der Scheibenausnehmung oder Wandung, insbesondere der Ausnehmung im Bereich der oberen Kante der Scheibenausnehmung oder Wandung, nach Fahrzeugaußen über.

Ferner kann die Fensterscheibe im unteren Bereich der Scheibenausnehmung oder Wandung, insbesondere im Bereich der unteren Kante der Scheibenausnehmung oder Wandung nach Fahrzeuginnen überstehen.

Besonders bevorzugt ist im oberen Bereich der Scheibenausnehmung ein gegebenenfalls vorhandener Überstand der Fensterscheibe nach Fahrzeuginnen kleiner als ein gegebenenfalls vorliegender Überstand der Fensterscheibe nach Fahrzeugaußen.

Weiterhin bevorzugt ist im unteren Bereich der Scheibenausnehmung oder Wandung ein gegebenenfalls vorhandener Überstand der Fensterscheibe nach Fahrzeuginnen größer als ein gegebenenfalls vorhandener Überstand der Fensterscheibe nach Fahrzeugaußen.

Die Fensterscheibe ist gepanzert. Bevorzugt besteht sie aus einem Kunststoff. Weiterhin bevorzugt besteht sie aus einem mehrlagigen Kunststoff. Die Fensterscheibe kann eine erhebliche Dicke aufweisen. Die Dicke der Fensterscheibe kann größer als die Dicke der Scheibenausnehmung und/oder der Dicke der Wandung sein. Bevorzugt beträgt das Dickenverhältnis größer 1,5, besonders bevorzugt größer 2 und weiterhin besonders größer 2,5.

Die Dicke der Fensterscheibe kann größer als 200 mm, insbesondere größer als 300 mm sein. Die Dicke der Fensterscheibe kann größer als 150 mm, insbesondere größer als 200 mm sein.

Das Fahrzeug kann eine oder mehrere Wandungen aufweisen, in denen eine oder mehrere Scheibenausnehmungen angeordnet sind. Die Scheibenausnehmung und/oder die Wandung kann/können in einer Tür des Fahrzeugs und/oder in einer Seitenwand des Fahrzeugs und/oder frontseitig am Fahrzeug und/oder heckseitig am Fahrzeug angeordnet sein. Es kann sich bei der Fensterscheibe um ein Seitenfenster, ein Frontfenster und/oder ein Heckfenster handeln.

Besonders bevorzugt weist die Fensterscheibe eine Außenfläche auf, die planparallel zur Innenfläche der Fensterscheibe verläuft. Die Fensterscheibe kann eine insbesondere quaderförmige Form haben. In den Randbereichen können eine oder mehrere Stufungen vorhanden sein. Die Stufungen können insbesondere im Wesentlichen rechtwinklig verlaufen. Die Stufungen können treppenstufenartig sein.

Die Fensterscheibe kann in einem Scheibenrahmen gehalten sein. Über den Scheibenrahmen kann die Fensterscheibe mit der Wandung in der Scheibenausnehmung befestigt werden. Bevorzugt ist der Scheibenrahmen mit der Wandung verschraubt und/oder verschweißt.

Ein Scheibenrahmen für eine Fensterscheibe für ein Fahrzeug der bereits beschriebenen Art kann eine Anschlagsfläche aufweisen, über den der Scheibenrahmen an einer Wandung des Fahrzeugs anliegt, wobei die Anschlagsfläche gegenüber der Fensterscheibe geneigt ist.

Die Anschlagsfläche kann als Flansch ausgebildet sein. Die Anschlagsfläche kann parallel zur Wandung verlaufen, so dass ein flächiges Anliegen möglich ist.

Besonders bevorzugt verläuft die Anschlagsfläche umlaufend um den Scheibenrahmen. Es ist aber auch möglich, dass die Anschlagsfläche sich nur an einer Seite oder zwei Seiten oder an drei Seiten oder an mehreren Seiten erstreckt.

Bei einer Fensterscheibe für ein Fahrzeug kann die Außenfläche größer als die Innenfläche sein. Hierdurch kann die Sicht aus dem Fahrzeuginneren verbessert werden.

Bevorzugt weist die Fensterscheibe einen gestuften Randbereich auf.

Bei einem Fahrzeug mit einer Fensterscheibe der bereits beschriebenen Art kann vorgesehen sein, dass die Fensterscheibe in einer Scheibenausnehmung einer Wandung angeordnet ist. Bevorzugt kann hierbei die Fensterscheibe nach Fahrzeugaußen einen Überlappungsbereich mit der Wandung aufweisen. Bevorzugt liegt dieser Überlappungsbereich seitlich und/oder im unteren Bereich und/oder im oberen Bereich.

Dadurch, dass die Scheibe über die Stufung eine größere Außenfläche als Innenfläche erhält, wird die Sicht durch den die Scheibe einfassenden Scheibenrahmen gegenüber einer Scheibe mit einer Außenfläche, die gleich der Innenfläche ist, nicht beeinträchtigt.

Bevorzugt ist die Außenfläche der Scheibe größer als die Scheibenausnehmung. Ferner kann die Innenfläche der Scheibe gleich oder kleiner als die Scheibenausnehmung sein.

Bevorzugt kommt die Erfindung als Nachrüstlösung in Betracht. Hierbei kann die existierende Scheibe eines Fahrzeugs entfernt werden und die wesentlich dickere gepanzerte Scheibe eingesetzt werden. Über den Neigungswinkel ist es insbesondere möglich, auf der einen Seite die Kopffreiheit und Kopfsicherheit im Innenraum zu gewährleisten und zugleich nach außen hin die Fahrzeugkontur nicht über Gebühr zu erhöhen. Zudem kann über die gleichbleibende Dicke der Fahrzeugscheibe gewährleistet werden, dass die ballistische Schutzeigenschaft gewährleistet ist. In den Bereichen einer geringeren Dicke können zusätzliche Verstärkungsmaßnahmen am Rahmen und/oder an der Wandung vorgesehen werden.

Sämtliche bereits beschriebenen Merkmale können miteinander kombiniert werden.

Vorteilhafte Ausgestaltungen der Erfindung werden anhand der folgenden Figuren erläutert. Es zeigen:
- Fig. 1 bis Fig. 4: eine Fahrzeugwandung mit einer Fensterscheibe in schematischer Darstellung in Schnittansicht;
- Fig. 5 und Fig. 6: weitere Ausgestaltungen einer Fahrzeugwandung mit ein gesetzter Fensterscheibe im Schnitt und
- Fig. 7: einen Scheibenrahmen ohne Scheibe.

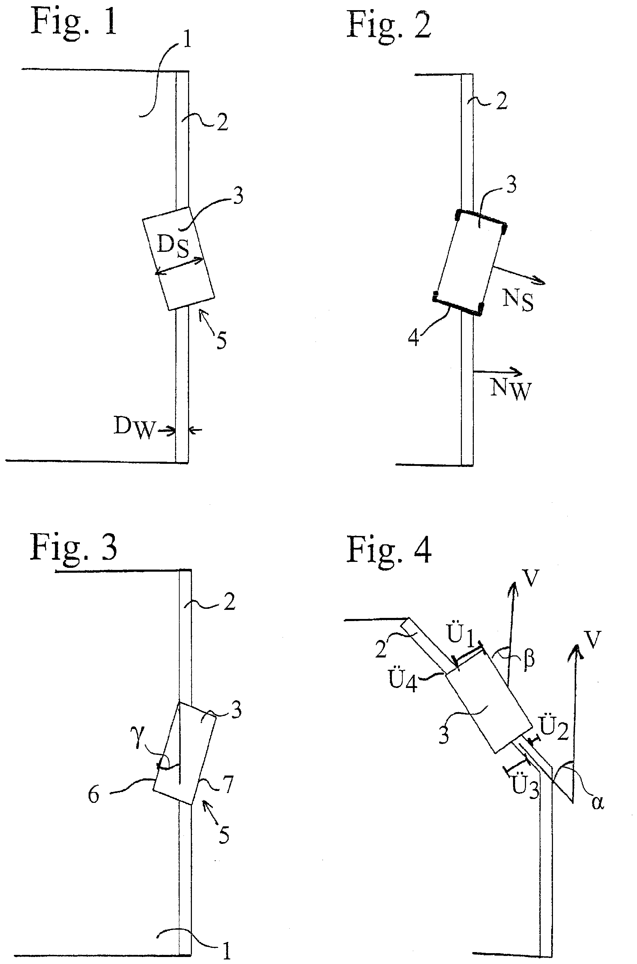

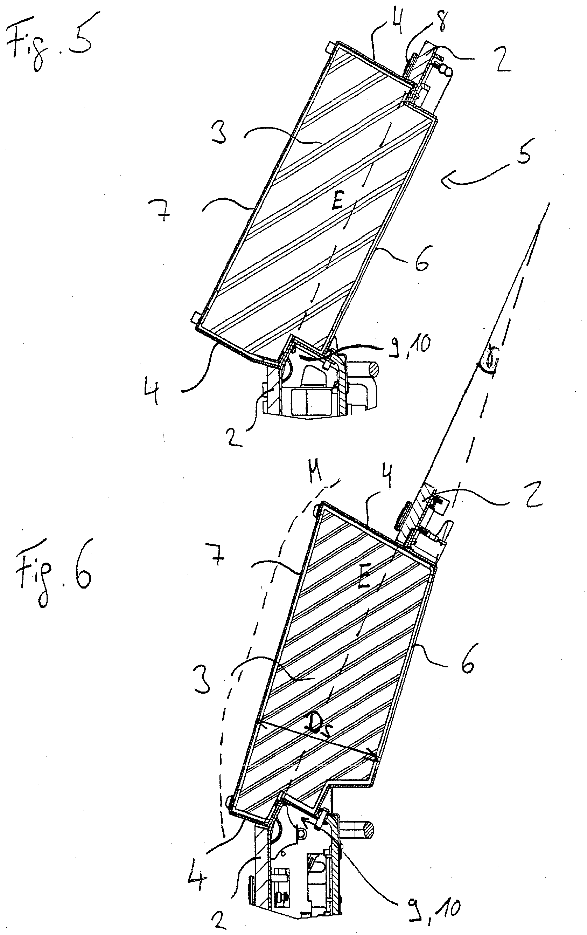

Die in den Fig. 1 und 5 dargestellten Ausführungen weisen nicht alle Merkmale des Kennzeichenteils des erteilten Anspruchs 1 auf.

Die Fig. 1 zeigt ein Fahrzeug 1 mit einer Seitenwand als Wandung 2, welche eine Scheibenausnehmung 5 aufweist, in die eine gepanzerte Fensterscheibe 3 eingesetzt ist. Die Fensterscheibe 3 weist eine dicke Ds von 200 mm auf und ist damit wesentlich dicker als die Dicke der Wandung Dw, welche der Dicke der Scheibenausnehmung entspricht. Wie in der Figur deutlich zu erkennen ist, ist die Fensterscheibe gegenüber der Scheibenausnehmung 5 bzw. der Wandung 2 geneigt.

Die Fig. 2 zeigt in entsprechender Weise eine Fensterscheibe 3, die in einem Scheibenrahmen 4 in einer Scheibenausnehmung 5 einer Fahrzeugwandung 2 montiert ist. Die Flächennormale Ns der Fensterscheibe 3 steht unter einem Neigungswinkel γ zur Flächennormalen Nw der Fahrzeugwand 2.

In der Fig. 3 ist der Neigungswinkel γ zwischen der Fahrzeugwandung bzw. der Scheibenausnehmung 5 und der Fensterscheibe 3 eingezeichnet. Ferner ist zu erkennen, dass die Fensterscheibe 3 im oberen Bereich der Scheibenausnehmung 5 nach Fahrzeugaußen übersteht und im unteren Bereich nach Fahrzeuginnen übersteht.

Die gepanzerte Scheibe 3 weist eine Innenfläche 6 auf, die planparallel zur Außenfläche 7 der Scheibe 3 ist. Die Scheibe 3 ist quaderförmig.

Gemäß Fig. 4 verläuft die Wandung 2 unter einem Winkel α zur Vertikalen V. Auch die Fensterscheibe 3 verläuft unter einem Winkel β zur Vertikalen V. Hierbei ist der Winkel β kleiner Winkel α.

In Fig. 4 ist ferner deutlich, dass der Überstand Ü1 im oberen Bereich nach Fahrzeugaußen größer ist als der Überstand Ü4 im oberen Bereich nach Fahrzeuginnen.

Ferner ist der Überstand Ü3 im unteren Bereich nach Fahrzeuginnen größer als der Überstand Ü2 im unteren Bereich nach Fahrzeugaußen.

Wie in der Fig. 3 ersichtlich, ist es allerdings auch möglich, dass im oberen Bereich nach innen kein Überstand vorliegt. Ferner kann auch im unteren Bereich nach außen kein Überstand vorliegen.

Die Fig. 5 und 6 zeigen eine Fahrzeugtür. Gemäß der Fig. 5 ist die Außenfläche 7 der Scheibe 3 größer als die Innenfläche 6 der Scheibe. Die Scheibe 3 ist über einen Scheibenrahmen 4 in der Scheibenausnehmung 5 der Wandung 2 montiert.

Im Randbereich der Scheibe 3 ist eine Stufung 9 vorgesehen. Damit ist die Außenfläche 7 größer als die Fläche der Scheibenausnehmung 5. Zugleich ist die Innenfläche 6 etwa gleich der Fläche der Scheibenausnehmung 5.

Über die Stufung 9 wird erreicht, dass die Scheibe 3 sich bei Beschuss nicht in das Fahrzeuginnere drückt. Ferner wird der Sichtbereich durch den Rahmen 4 nicht eingeschränkt, da der Rahmen 4 gegenüber der Scheibenausnehmung 5 zurückversetzt ist und somit nicht im Sichtbereich liegt. Zugleich ergibt sich im Überlappungsbereich 10 zwischen Wandung 2 und Scheibe 3 eine erhöhte ballistische Sicherheit.

Wie in Fig. 6 dargestellt, kann die Scheibe 3 auch nur an einer Seite eine Stufung 9 aufweisen. Es können eine oder mehrere Stufen vorgesehen sein.

In Fig. 6 ist der Winkel γ zwischen Scheibe 3 und Wandung 2 eingezeichnet. Der Winkel liegt etwa im Bereich von 5° bis 15°. Dies entspricht dem Winkel γ zwischen der Ebene E der Scheibenausnehmung 5 und der Scheibe 3.

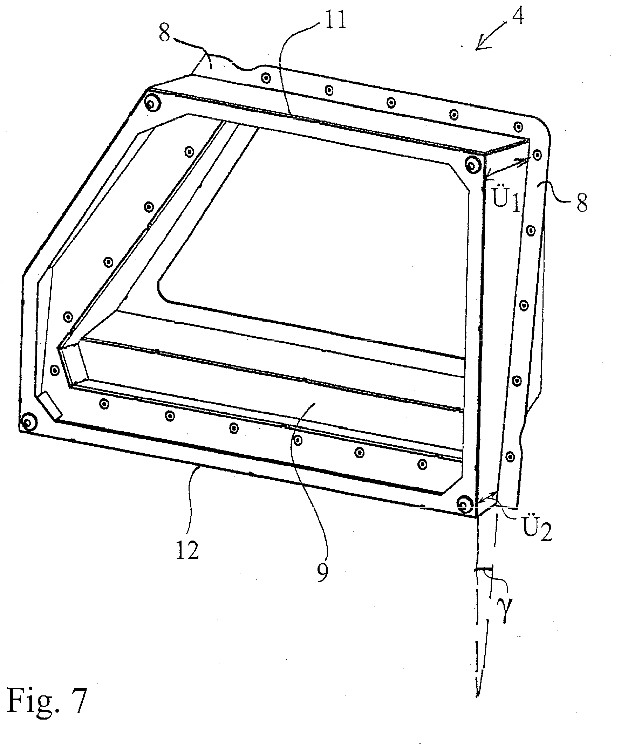

In Fig. 7 ist ein möglicher Scheibenrahmen 4 ohne Scheibe 3 dargestellt. Zu erkennen ist eine umlaufende Anschlagsfläche 8, über welche sich der Scheibenrahmen 4 an einer Wandung 2 im Randbereich einer Scheibenausnehmung 5 abstützt. Die Anschlagsfläche 8 verläuft hierbei parallel zur Wandung 2, so dass ein flächiges Anliegen möglich ist. Der Scheibenrahmen 4 gemäß Fig. 7 kann in die Anordnung gemäß Fig. 6 eingesetzt werden. Bei eingesetzter Scheibe 3 weist diese einen Winkel γ zur Anschlagsfläche 8 auf.

Der Überstand Ü1 im oberen Bereich nach Fahrzeugaußen ist größer als der Überstand Ü2 im unteren Bereich nach Fahrzeugaußen. Dadurch bleibt die Fahrzeugkontur auch im Bereich der neuen dicken Scheibe 3 innerhalb der Verlademaßkurve M (Fig. 6).

Die Scheibe 3 ist als Kunststoffscheibe ausgeführt und kann als Transparentschutz für ein militärisches und/oder gepanzertes Fahrzeug 1 verwendet werden.

Die Erfindung führt zu einem optimierten Einbau der dicken Scheiben. Dadurch, dass die obere Störkante der Scheibe 3 nach außen verschoben ist, ist die Gefahr eines Kopfanschlagens verringert. Dadurch, dass die Scheibe 3 einen Überlappungsbereich 10 mit der Wandung 2 aufweist, werden die Sichtbedingungen optimiert. Die Scheibe 3 überdeckt außen einen Teil der Fahrzeugstruktur. Damit werden die Sichtlinien erweitert, wobei das Material der Scheibe 3 zugleich als Panzerschutz wirkt und in diesen Strukturbereichen keine weiteren Panzerungselemente benötigt werden, wobei diese optional auch möglich sind.

Die Erfindung eignet sich für Nachrüstlösungen, wobei die Fahrzeugwandungen 2 sowie Scheibenausnehmungen 5 für die Scheiben 3 unverändert bleiben können. Es werden lediglich neue Scheibenrahmen 4 und Scheiben 3 benötigt. Gegenüber einem einfachen senkrechten Aufbau der Scheibe zur Wandungsfläche 2 nach außen besteht der Vorteil, dass durch die Erfindung die Sicht weniger eingeschränkt ist, da kein "Tunneleffekt" durch den Scheibenrahmen 4 mehr gegeben ist. Die störenden Außenkanten, die durch die Einbau der dickeren Scheibe 3 entstehen und das Fahrzeug 1 breiter machen, so dass eine Verladbarkeit oder Tunnelfahrt problematisch ist, werden beseitigt.

Durch das seitliche Überstehen der Scheibe 3 und die stufige Scheibenkontur wird die Sicht nicht behindert, obschon die Kontur der Stahlwanne des Fahrzeugs und der Tür des Fahrzeugs beibehalten werden kann. Die Scheiben 3, insbesondere die Seitenscheiben, werden gegen die eigentliche Konstruktionsfläche, d.h. die Ebene E der Scheibenausnehmung, gekippt. Dadurch ist das Fahrzeug weniger breit, da störende Ecken und Kanten weniger weit nach außen abstehen.

### Bezugszeichen:

- 1: Fahrzeug
- 2: Wandung
- 3: Fensterscheibe
- 4: Scheibenrahmen
- 5: Scheibenausnehmung
- 6: Innenfläche der Scheibe 3
- 7: Außenfläche der Scheibe 3
- 8: Anschlagsfläche
- 9: Stufung
- 10: Überlappungsbereich
- 11: obere Kante
- 12: untere Kante

- D: Dicke
- E: Ebene der Scheibenausnehmung 5
- M: Verlademaßkurve
- N: Normale
- V: Vertikale

## Patentansprüche

1. Fahrzeug (1) mit einer Scheibenausnehmung (5) zur Aufnahme einer Fensterscheibe (3), wobei die Scheibenausnehmung (5) in einer Tür des Fahrzeugs (1) und/oder einer Seitenwand des Fahrzeugs (1) und/oder frontseitig am Fahrzeug (1) und/oder heckseitig am Fahrzeug (1) angeordnet ist, wobei eine gepanzerte Fensterscheibe (3) in der Scheibenausnehmung (5) angeordnet ist und die Fensterscheibe (3) gegenüber der Scheibenausnehmung (5) geneigt ist, **dadurch gekennzeichnet dass** im oberen Bereich ein Überstand (Ü1) der Fensterscheibe (3) nach Fahrzeugaußen größer ist als ein Überstand (Ü2) der Fensterscheibe (3) im unteren Bereich nach Fahrzeugaußen.

2. Fahrzeug nach Anspruch 1, **dadurch gekennzeichnet, dass** der Neigungswinkel (γ) größer als 5° oder größer als 10° oder größer als 15° ist.

3. Fahrzeug nach einem der vorhergehenden Ansprüche, **dadurch gekennzeichnet, dass** der Neigungswinkel (γ) kleiner als 30° oder kleiner als 20° oder kleiner als 15° ist.

4. Fahrzeug nach einem der vorhergehenden Ansprüche, **dadurch gekennzeichnet, dass** die Scheibenausnehmung (5) in einem Winkel (α) zur Vertikalen (V) steht, der größer ist, als der Winkel (β) zwischen der Fensterscheibe (3) und der Vertikalen (V).

5. Fahrzeug nach einem der vorhergehenden Ansprüche, **dadurch gekennzeichnet, dass** die Fensterscheibe (3) im oberen Bereich der Scheibenausnehmung (5) nach Fahrzeugaußen übersteht und/oder im unteren Bereich der Scheibenausnehmung (5) nach Fahrzeuginnen übersteht.

6. Fahrzeug nach einem der vorhergehenden Ansprüche, **dadurch gekennzeichnet, dass** im oberen Bereich der Scheibenausnehmung (5) ein Überstand (Ü4) der Fensterscheibe (3) nach Fahrzeuginnen kleiner ist als ein Überstand (Ü1) der Fensterscheibe (3) nach Fahrzeugaußen.

7. Fahrzeug nach einem der vorhergehenden Ansprüche, **dadurch gekennzeichnet, dass** im unteren Bereich der Scheibenausnehmung (5) ein Überstand (Ü3) der Fensterscheibe(3) nach Fahrzeuginnen größer ist als ein Überstand (Ü2) der Fensterscheibe (3) nach Fahrzeugaußen.

8. Fahrzeug nach einem der vorhergehenden Ansprüche, **dadurch gekennzeichnet, dass** die Fensterscheibe (3) gepanzert ist, insbesondere aus einem Kunststoff, bevorzugt aus mehrlagigem Kunststoff.

9. Fahrzeug nach einem der vorhergehenden Ansprüche, **dadurch gekennzeichnet, dass** die Dicke (Ds) der Fensterscheibe (3) größer als die Dicke der Scheibenausnehmung (Dw) ist.

10. Fahrzeug nach Anspruch 9, **dadurch gekennzeichnet, dass** das Dickenverhältnis größer 1,5 bevorzugt größer 2, besonders bevorzugt größer 2,5 ist.

11. Fahrzeug nach einem der vorhergehenden Ansprüche, **dadurch gekennzeichnet, dass** die Dicke der Fensterscheibe (3) größer als 150 mm, insbesondere größer als 200 mm, ist.

12. Fahrzeug nach einem der vorhergehenden Ansprüche, **dadurch gekennzeichnet, dass** die Fensterscheibe (3) eine Außenfläche (7) aufweist, die planparallel zur Innenfläche (6) verläuft.

13. Fahrzeug nach einem der vorhergehenden Ansprüche, **dadurch gekennzeichnet, dass** die Fensterscheibe (3) in einem Scheibenrahmen (4) gehalten ist.

14. Fahrzeug nach einem der vorhergehenden Ansprüche, **dadurch gekennzeichnet, dass** der Scheibenrahmen (4) über eine Verschraubung mit einer Wandung (4) verbunden ist.

15. Fahrzeug (1) nach einem der vorhergehenden Ansprüche, **gekennzeichnet durch** einen Scheibenrahmen (4) mit einer Anschlagsfläche, über den der Scheibenrahmen (4) an einer Wandung (2) eines Fahrzeugs (1) anliegt,
wobei die Anschlagsfläche (8) gegenüber der Fensterscheibe (3) geneigt ist.

16. Fahrzeug nach Anspruch 15, **dadurch gekennzeichnet, dass** die Anschlagsfläche (8) als Flansch ausgebildet ist.

17. Fahrzeug nach Anspruch 15 oder 16, **dadurch gekennzeichnet, dass** die Anschlagsfläche (8) umlaufend ist.

18. Fahrzeug nach einem der vorhergehenden Ansprüche, **gekennzeichnet durch** eine Fensterscheibe, deren Außenfläche (7) größer als die Innenfläche (6) ist.

19. Fahrzeug nach Anspruch 18, **gekennzeichnet durch** einen gestuften Randbereich (9).

20. Fahrzeug nach Anspruch 18 oder 19, **dadurch gekennzeichnet, dass** die Fensterscheibe (3) in einer Scheibenausnehmung (5) einer Wandung (2) angeordnet ist.

21. Fahrzeug nach Anspruch 20, **dadurch gekennzeichnet, dass** die Fensterscheibe (3) nach Fahrzeugaußen einen Überlappungsbereich (10) mit der Wandung (2) hat, insbesondere seitlich und/oder im unteren Bereich und/oder im oberen Bereich.

22. Fahrzeug nach Anspruch 20 oder 21, **dadurch gekennzeichnet, dass** ein Scheibenrahmen (5) die Sicht aus dem Fahrzeuginneren nicht beeinträchtigt.

## Claims

1. Vehicle (1) having a pane clearance (5) for receiving a window pane (3), wherein the pane clearance (5) is disposed in a door of the vehicle (1) and/or a side wall of the vehicle (1) and/or on the front of the vehicle (1) and/or on the rear of the vehicle (1), wherein an armoured window pane (3) is disposed in the pane clearance (5) and the window pane (3) is inclined in relation to the pane clearance (5),
**characterized in that**
a protuberance (U1) of the window pane (3) towards the exterior of the vehicle in the upper region is larger than a protuberance (U2) of the window pane (3) towards the exterior of the vehicle in the lower region.

2. Vehicle according to Claim 1, **characterized in that** the angle of inclination (γ) is larger than 5°, or larger than 10°, or larger than 15°.

3. Vehicle according to one of the preceding claims, **characterized in that** the angle of inclination (γ) is smaller than 30°, or smaller than 20°, or smaller than 15°.

4. Vehicle according to one of the preceding claims, **characterized in that** the pane clearance (5) in relation to the vertical (V) is at an angle (α) which is larger than the angle (β) between the window pane (3) and the vertical (V).

5. Vehicle according to one of the preceding claims, **characterized in that** the window pane (3) in the upper region of the pane clearance (5) projects towards the exterior of the vehicle, and/or in the lower region of the pane clearance (5) projects towards the interior of the vehicle.

6. Vehicle according to one of the preceding claims, **characterized in that** a protuberance (U4) of the window pane (3) towards the interior of the vehicle in the upper region of the pane clearance (5) is smaller than a protuberance (U1) of the window pane (3) towards the exterior of the vehicle.

7. Vehicle according to one of the preceding claims, **characterized in that** a protuberance (U3) of the window pane (3) towards the interior of the vehicle in the lower region of the pane clearance (5) is larger than a protuberance (U2) of the window pane (3) towards the exterior of the vehicle.

8. Vehicle according to one of the preceding claims, **characterized in that** the window pane (3) is armoured, in particular is from a plastics material, preferably from a multi-tiered plastics material.

9. Vehicle according to one of the preceding claims, **characterized in that** the thickness (Ds) of the window pane (3) is larger than the thickness of the pane clearance (Dw).

10. Vehicle according to Claim 9, **characterized in that** the thickness ratio is greater than 1.5, preferably greater than 2, particularly preferably greater than 2.5.

11. Vehicle according to one of the preceding claims, **characterized in that** the thickness of the window pane (3) is larger than 150 mm, in particular larger than 200 mm.

12. Vehicle according to one of the preceding claims, **characterized in that** the window pane (3) has an external face (7) which runs so as to be plane-parallel with the internal face (6).

13. Vehicle according to one of the preceding claims, **characterized in that** the window pane (3) is held in a pane frame (4).

14. Vehicle according to one of the preceding claims, **characterized in that** the pane frame (4) is connected to a wall (4) by way of a screw fitment.

15. Vehicle (1) according to one of the preceding claims, **characterized by** a pane frame (4) having a stop surface by way of which the pane frame (4) bears on a wall (2) of a vehicle (1), wherein the stop surface (8) is inclined in relation to the window pane (3).

16. Vehicle according to Claim 15, **characterized in that** the stop surface (8) is configured as a flange.

17. Vehicle according to Claim 15 or 16, **characterized in that** the stop surface (8) is encircling.

18. Vehicle according to one of the preceding claims, **characterized by** a window pane, the external face (7) of the latter being larger than the internal face (6).

19. Vehicle according to Claim 18, **characterized by** a stepped peripheral region (9).

20. Vehicle according to Claim 18 or 19, **characterized in that** the window pane (3) is disposed in a pane clearance (5) of a wall (2).

21. Vehicle according to Claim 20, **characterized in that** the window pane (3) towards the exterior of the vehicle, in particular laterally and/or in the lower region and/or in the upper region, has an overlap region (10) with the wall (2).

22. Vehicle according to Claim 20 or 21, **characterized in that** a pane frame (5) does not impede the view from the interior of the vehicle.

## Revendications

1. Véhicule (1) doté d'une baie de vitre (5) destinée à recevoir une vitre de fenêtre (3), dans lequel la baie de vitre (5) est disposée dans une porte du véhicule (1) et/ou dans une paroi latérale du véhicule (1) et/ou dans le côté avant du véhicule (1) et/ou dans le côté arrière du véhicule (1), dans lequel une vitre de fenêtre blindée (3) est disposée dans la baie de vitre (5) et la vitre de fenêtre (3) est inclinée par rapport à la baie de vitre (5), **caractérisé en ce qu'**une protubérance (Ü1) de la vitre de fenêtre (3) vers l'extérieur du véhicule est plus grand dans la région supérieure qu'une protubérance (Ü2) de la vitre de fenêtre (3) vers l'extérieur du véhicule dans la région inférieure.

2. Véhicule selon la revendication 1, **caractérisé en ce que** l'angle d'inclinaison (γ) est supérieur à 5° ou supérieur à 10° ou supérieur à 15°.

3. Véhicule selon l'une quelconque des revendications précédentes, **caractérisé en ce que** l'angle d'inclinaison (γ) est inférieur à 30° ou inférieur à 20° ou inférieur à 15°.

4. Véhicule selon l'une quelconque des revendications précédentes, **caractérisé en ce que** la baie de vitre (5) est placée avec un angle (α) par rapport à la verticale (V), qui est plus grand que l'angle (β) entre la vitre de fenêtre (3) et la verticale (V).

5. Véhicule selon l'une quelconque des revendications précédentes, **caractérisé en ce que** la vitre de fenêtre (3) est saillante vers l'extérieur du véhicule dans la région supérieure de la baie de vitre (5) et/ou est saillante vers l'intérieur du véhicule dans la région inférieure de la baie de vitre (5).

6. Véhicule selon l'une quelconque des revendications précédentes, **caractérisé en ce que** dans la région supérieure de la baie de vitre (5) une protubérance (Ü4) de la vitre de fenêtre (3) vers l'intérieur du véhicule est plus petit qu'une protubérance (Ü1) de la vitre de fenêtre (3) vers l'extérieur du véhicule.

7. Véhicule selon l'une quelconque des revendications précédentes, **caractérisé en ce que** dans la région inférieure de la baie de vitre (5) une protubérance (Ü3) de la vitre de fenêtre (3) vers l'intérieur du véhicule est plus grand qu'une protubérance (Ü2) de la vitre de fenêtre (3) vers l'extérieur du véhicule.

8. Véhicule selon l'une quelconque des revendications précédentes, **caractérisé en ce que** la vitre de fenêtre (3) est blindée, en particulier en une matière plastique, de préférence en une matière plastique multicouche.

9. Véhicule selon l'une quelconque des revendications précédentes, **caractérisé en ce que** l'épaisseur (Ds) de la vitre de fenêtre (3) est plus grande que l'épaisseur de la baie de vitre (Dw).

10. Véhicule selon la revendication 9, **caractérisé en ce que** le rapport d'épaisseur est supérieur à 1,5, de préférence supérieur à 2, de préférence encore supérieur à 2,5.

11. Véhicule selon l'une quelconque des revendications précédentes, **caractérisé en ce que** l'épaisseur de la vitre de fenêtre (3) est supérieure à 150 mm, en particulier supérieure à 200 mm.

12. Véhicule selon l'une quelconque des revendications précédentes, **caractérisé en ce que** la vitre de fenêtre (3) présente une face extérieure (7), qui est plane parallèle à la face intérieure (6).

13. Véhicule selon l'une quelconque des revendications précédentes, **caractérisé en ce que** la vitre de fenêtre (3) est maintenue dans un cadre de vitre (4).

14. Véhicule selon l'une quelconque des revendications précédentes, **caractérisé en ce que** le cadre de vitre (4) est assemblé à une paroi (4) par un assemblage vissé.

15. Véhicule (1) selon l'une quelconque des revendications précédentes, **caractérisé par** un cadre de vitre (4) avec une face de butée, par laquelle le cadre de vitre (4) s'applique sur une paroi (2) d'un véhicule (1), dans lequel la face de butée (8) est inclinée par rapport à la vitre de fenêtre (3).

16. Véhicule selon la revendication 15, **caractérisé en ce que** la face de butée (8) est réalisée en forme de bride.

17. Véhicule selon la revendication 15 ou 16, **caractérisé en ce que** la face de butée (8) est périphérique.

18. Véhicule selon l'une quelconque des revendications précédentes, **caractérisé par** une vitre de fenêtre, dont la face extérieure (7) est plus grande que la face intérieure (6).

19. Véhicule selon la revendication 18, **caractérisé par** une région de bord étagée (9).

20. Véhicule selon la revendication 18 ou 19, **caractérisé en ce que** la vitre de fenêtre (3) est disposée dans une baie de vitre (5) d'une paroi (2).

21. Véhicule selon la revendication 20, **caractérisé en ce que** la vitre de fenêtre (3) comporte vers l'extérieur du véhicule une région de chevauchement (10) avec la paroi (2), en particulier latéralement et/ou dans la région inférieure et/ou dans la région supérieure.

22. Véhicule selon la revendication 20 ou 21, **caractérisé en ce qu'**un cadre de fenêtre (5) ne gêne pas la vue à partir de l'intérieur du véhicule.
